# EUROPEAN PATENT APPLICATION

(11) **EP 4 776 164 A1**
(43) Date of publication of application: **15.07.2026**
(21) Application number: 25151147.3
(22) Date of filing: 10.01.2025
(51) Int. Cl.: G06F 21/44, G06F 21/60

(54) **TECHNIQUES FOR OPERATING A RUNTIME SYSTEM FOR AN INDUSTRIAL CONTROL ENVIRONMENT**

(71) Applicant: CODESYS Holding GmbH, 87439 Kempten (DE)
(72) Inventor: Scholl, Adrian, 87439 Kempten (DE)
(74) Representative: Lucke, Andreas

(57) **Abstract**

A method for operating a runtime system for an industrial control environment comprises steps of defining a parent process in the runtime system; starting at least a first child process and a second child process from the parent process in the runtime system; establishing a first private bidirectional communication channel between the parent process and the first child process, and a second private bidirectional communication channel between the parent process and the second child process; receiving, at the second child process, a first handshake request from the first child process via a communication channel; and verifying, at the second child process, the authenticity of the first handshake request. Verifying the authenticity of the first handshake request comprises sending a first attestation request to the parent process via the second private bidirectional communication channel, and receiving a first attestation confirmation from the parent process via the second private bidirectional communication channel.

## Description

### Technical Field

The present disclosure relates to the field of industrial control, and in particular to techniques for securing the operation of a runtime system for an industrial control environment against intruders.

### Background

Industrial control programs may run on industrial controller systems for real-time control of industrial processes, such as control of machinery, chemical plants or other factory environments. Industrial control programs are usually written in a high-level programming language in a programming environment. Conventionally, these programs are compiled and then stored and run by a runtime system located on an industrial controller system that directly controls an associated machinery or industrial process. The code compilation may typically take place in the programming environment, but alternatively can also be done on the industrial controller system itself.

The runtime system may access the necessary processing and memory resources of the industrial controller system for executing the industrial control programs, but may also comprise interface components for communicating with the associated machinery or industrial process, such as via a fieldbus, as well as interface components for communicating with the programming environment. In many practically relevant scenarios, the runtime system may also comprise a considerable number of other components: A visualization component may be adapted to access and process data received from the associated machinery or industrial process, and to visualize the data for a user, either locally on the industrial controller system itself or remotely via a network, such as the Internet. A user management component may be adapted to manage access rights, including software updates. A web server component may be adapted to establish a web access to the visualization component and/or the management component, such as via the Internet. Typically, all these different components share the same process space.

This architecture is versatile and enhances the user comfort, but may pose some security challenges. An unauthorized intruder that gains access to one of these components may potentially control the entire runtime system, possibly including the controlled machinery and industrial processes.

Techniques are known outside the field of industrial control to mitigate security risks, such as by partitioning a larger process into several secure hardware enclaves, cf. N. C. Will et al., "Trusted Inter-Process Communication Using Hardware Enclaves"; IEEE International Systems Conference (SysCon), 2021, pp. 1-7. These techniques provide a high security level, but are intrinsically hardware-dependent. Moreover, the partitioning may significantly slow down the processing speed, which is problematic for industrial control applications that in many cases require real-time control.

### Summary

In view of the prior art, there is a need for improved techniques for securing the operation of a runtime system against unauthorized access.

This problem can be addressed with a method for operating a runtime system according to independent claim 1 and a runtime system for an industrial control environment according to independent claim 10. The dependent claims relate to optional embodiments.

In a first aspect, the disclosure relates to a method for operating a runtime system for an industrial control environment, comprising: defining a parent process in the runtime system; starting at least a first child process and a second child process from the parent process in the runtime system; establishing a first private bidirectional communication channel between the parent process and the first child process, and a second private bidirectional communication channel between the parent process and the second child process; receiving, at the second child process, a first handshake request from the first child process via a communication channel; and verifying, at the second child process, the authenticity of the first handshake request. Verifying the authenticity of the first handshake request comprises sending a first attestation request to the parent process via the second private bidirectional communication channel, and receiving a first attestation confirmation from the parent process via the second private bidirectional communication channel.

According to the present disclosure, the security of the runtime system may be enhanced by partitioning functionalities of the runtime system into a parent process and a plurality of child processes. The parent process may be adapted to start the child processes, and may be communicatively coupled to the child processes by respective private bidirectional communication channels. When two or more child processes subsequently establish an interprocess communication, the authenticity of the respective handshake requests may be verified by means of an attestation from the parent process, via the respective private bidirectional communication channels.

These techniques may advantageously guarantee the authenticity of interprocess communication originating from one of the child processes to the communication partners, i.e., to the other child processes, and hence allow to detect unauthorized access to the runtime system. If an intruder manages to infiltrate one of the child processes, his control may be confined to that particular child process, and the intrusion may be detected in the interprocess communication. At the same time, the techniques of the present disclosure can be implemented hardware-independently on many different platforms, in a way that eases the impact on the processing speed.

In the context of the present disclosure, a runtime system may denote any hardware or software implementation adapted to run an industrial control program on an industrial controller.

A (first or second) child process may correspond to any process or component or functionality of a runtime system. In some embodiments, some or all of the processes or components or functionalities of the runtime system may be partitioned into a plurality of child processes.

The parent process may correspond to a process or component of the runtime system that is adapted to control and manage the child processes.

In the context of the present disclosure, the parent process and each of the child processes may be associated with distinct process spaces. For instance, each of the process spaces may be associated with its own allocated memory resources and/or variables.

In particular, the parent process and/or the first child process and/or the second child process do not share a common process space.

By separating the process spaces, intrusion attempts can be kept local, and the security and integrity of the overall runtime system can be enhanced.

In some embodiments, the parent process or the (first or second) child processes may be implemented in hardware. In other embodiments, the parent process or the (first or second) child processes may be implemented in software or firmware. In further embodiments, the parent process or the (first or second) child processes may be implemented partly in hardware and partly in firmware/software.

A handshake request, in the context of the present disclosure, may refer to any interprocess communication with which one of the child processes strives to establish a communication with one of the other child processes.

In the context of the present disclosure, the authenticity of the first handshake request may relate to a confirmation that the first handshake request originates from the first child process.

The first attestation confirmation may be adapted to confirm, to the second child process, that the first handshake request originated from the first child process.

In the context of the present disclosure, an attestation request may denote any message from a child process to the parent process that is adapted to trigger the parent process to check and confirm the authenticity of the handshake request.

In the context of the present disclosure, a communication channel may denote any physical or logical channel suitable for interprocess communication between at least two child processes in the runtime system.

According to an embodiment, the method may further comprise allowing, at the second child process, a bidirectional communication with the first child process via the communication channel upon successfully verifying the authenticity of the first handshake request.

The method may further comprise preventing, at the second child process, a communication with the first child process in case the authenticity of the first handshake request has not been verified, or until the authenticity of the first handshake request has been verified.

In an embodiment, the method may further comprise establishing a bidirectional communication channel between the first child process and the second child process via the communication channel upon verifying the authenticity of the first handshake request.

The method may comprise exchanging messages, in particular encrypted messages and/or authenticated messages, between the first child process and the second child process via the communication channel upon verifying the authenticity of the first handshake request.

In this way, the techniques of the present disclosure can be employed to guarantee that interprocess communication takes place only between child processes that have been authenticated by the parent process.

Optionally, the interprocess communication may be secured by means of cryptographic techniques, such as encryption or authentication.

In the architecture according to the present disclosure, the parent process can be kept slim, and its integrity and security can be guaranteed by protection measures specific to the operating system on which the parent process runs.

According to an embodiment, the first handshake request comprises a first attestation tag.

The context of the present disclosure, any string of data that allows a child process to verify an origin of a handshake request received from another child process may be employed as an attestation tag.

According to an embodiment, the first attestation request may comprise the first attestation tag.

In this way, the attestation tag is provided to the parent process, and may allow the parent process to check and verify the authenticity of the first handshake request and, in case the verification is successful, to provide a corresponding first attestation confirmation to the second child process.

According to an embodiment, the first attestation tag originates from the parent process.

For instance, the first attestation tag may have been provided to the first child process from the parent process.

The method may further comprise, at the first child process, providing first handshake data to the parent process via the first private bidirectional communication channel, and receiving the first attestation tag from the parent process via the first private bidirectional communication channel in response to the first handshake data.

According to an embodiment, the method comprises, at the parent process, generating the first attestation tag in response to the first handshake data.

According to an embodiment, the first attestation tag may correspond to or may comprise a first parent public key of a first asymmetric public-private key generated by the parent process.

In particular, the method may comprise generating, at the parent process, a first asymmetric public-private key, keeping the first parent private key at the parent process and providing the first parent public key to the first child process.

The first child process may employ the first parent public key as (part of) an attestation tag in the first handshake request with the second child process.

Once the parent process receives the attestation tag from the second child process as part of the first attestation request, the parent process may verify the authenticity of the first attestation tag by means of its first parent private key.

Other attestation or authentication techniques may likewise be employed for verifying the authenticity of the first handshake request.

According to an embodiment, the method may further comprise sharing a first cryptographic key between the first child process and the second child process via the communication channel.

The first cryptographic key may serve to additionally protect the communication between the first child process and the second child process against eavesdropping.

In particular, the first cryptographic key may comprise a first asymmetric public-private key shared between the first child process and the second child process via the communication channel.

According to an embodiment, the first handshake request and/or the first handshake data may comprise the first public key.

Hence, in some embodiments the first public key can likewise be authenticated as part of the first handshake request, thereby further enhancing the security of the interprocess communication.

In some embodiments, the method comprises generating the first cryptographic key at the first child process.

In other embodiments, the first cryptographic key may be generated at the parent process, and may be provided to the first child process via the first private bidirectional communication channel.

In the context of the present disclosure, any communication channel that allows bidirectional communication between the parent process and a child process and protects the exchanged data against disturbance and/or manipulation by means of a third party different from the parent process and the child process can be considered a private bidirectional communication channel.

For instance, the first private bidirectional communication channel may comprise a first pipe, and/or the second private bidirectional communication channel may comprise a second pipe.

According to an embodiment, the first pipe and/or the second pipe may be an anonymous pipe.

Employing the techniques described above, the second child process may verify the authenticity of the first handshake request originating from the first child process. Corresponding steps in which the roles of the first child process and the second child process are interchanged may be employed subsequently to verify the authenticity of the second child process to the first child process, thereby allowing the first child process and the second child process to mutually authenticate via their respective parent-child relationship.

In particular, the method may further comprise receiving, at the first child process, a second handshake request from the second child process via the communication channel, and verifying, at the first child process, the authenticity of the second handshake request.

In particular, verifying the authenticity of the second handshake request may comprise sending a second attestation request to the parent process via the first private bidirectional communication channel, and receiving a second attestation confirmation from the parent process via the first private bidirectional communication channel.

According to an embodiment, the second attestation confirmation is adapted to confirm, to the first child process, that the second handshake request originated from the second child process.

The method may further comprise allowing, at the first child process, a bidirectional communication with the second child process via the communication channel upon successfully verifying the authenticity of the second handshake request.

According to an embodiment, the method comprises preventing, at the first child process, a communication with the second child process in case the authenticity of the second handshake request has not been verified, or until the authenticity of the second handshake request has been verified.

In an embodiment, the method comprises establishing the bidirectional communication between the first child process and the second child process via the communication channel upon verifying the authenticity of the second handshake request.

The second handshake request may comprise a second attestation tag.

In particular, the second attestation request may comprise the second attestation tag.

According to an embodiment, the second attestation tag originates from the parent process.

In an embodiment, the method further comprises, at the second child process, providing second handshake data to the parent process via the second private bidirectional communication channel, and receiving the second attestation tag from the parent process via the second private bidirectional communication channel in response to the second handshake data.

The method may further comprise, at the parent process, generating the second attestation tag in response to the second handshake data.

According to an embodiment, the second attestation tag may correspond to or may comprise a second parent public key of a second asymmetric public-private key generated by the parent process.

In particular, the method may comprise generating, at the parent process, a second asymmetric public-private key, keeping the second parent private key at the parent process and providing the second parent public key to the second child process.

The second child process may employ the second parent public key as (part of) the second attestation tag in the second handshake request.

Once the parent process receives the second attestation tag from the first child process as part of the second attestation request, the parent process may verify the authenticity of the second attestation tag by means of its second parent private key.

Other attestation or authentication techniques may likewise be employed for verifying the authenticity of the second handshake request.

The method may further comprise sharing a second cryptographic key between the second child process and the first child process via the communication channel.

According to an embodiment, the second cryptographic key comprises a second asymmetric public-private key shared between the second child process and the first child process via the communication channel.

According to an embodiment, the second handshake request and/or the second handshake data comprises the second public key.

In some embodiments, the method comprises generating the second cryptographic key at the second child process.

In other embodiments, the second cryptographic key may be generated at the parent process, and may be provided to the second child process via the second private bidirectional communication channel.

The techniques of the present disclosure have been described above with reference to a parent process and two child processes. However, it is a particular advantage of the present disclosure that the runtime system may be partitioned into any integer number of child processes, and a secure interprocess communication may be established between any pair selected from these child processes, in the same way as described above with reference to the first child process and the second child process.

The method according to the present disclosure may be a computer-implemented method.

In a second aspect, the techniques of the present disclosure relate to a computer program or a computer program product or a computer-readable storage medium, each comprising computer readable instructions, wherein the computer-readable instructions, when run on the runtime system for an industrial control environment, implement on the runtime system method with some or all of the features described above.

In a third aspect, the disclosure relates to a runtime system for an industrial control environment, comprising: a parent process; a first child process connected to the parent process via a first private bidirectional communication channel; and a second child process connected to the parent process via a second private bidirectional communication channel. The second child process is adapted to receive a first handshake request from the first child process via a communication channel. The second child process is adapted to verify the authenticity of the first handshake request, wherein verifying the authenticity of the first handshake request comprises sending a first attestation request from the second child process to the parent process via the second private bidirectional communication channel and receiving a first attestation confirmation from the parent process via the second private bidirectional communication channel.

The runtime system of the third aspect may be adapted to implement a method with some or all of the features described above with reference to the first aspect or second aspect.

According to an embodiment, the parent process is adapted to start the first child process in the runtime system.

In an embodiment, the parent process is adapted to start the second child process in the runtime system.

According to an embodiment, the second child process is adapted to allow a bidirectional communication with the first child process via the communication channel upon successfully verifying the authenticity of the first handshake request.

In an embodiment, the second child process is adapted to prevent a communication with the first child process in case the authenticity of the first handshake request has not been verified, or until the authenticity of the first handshake request has been verified.

According to an embodiment, the runtime system may be adapted to establish a bidirectional communication between the first child process and the second child process via the communication channel upon verifying the authenticity of the first handshake request.

The runtime system may be adapted to exchange messages, in particular encrypted messages and/or authenticated messages, between the first child process and the second child process via the communication channel upon verifying the authenticity of the first handshake request.

In an embodiment the first handshake request comprises a first attestation tag.

The first attestation request may comprise the first attestation tag.

According to an embodiment the first attestation tag originates from the parent process.

According to an embodiment, the first child process is adapted to provide first handshake data to the parent process via the first private bidirectional communication channel, and is further adapted to receive the first attestation tag from the parent process via the first private bidirectional communication channel in response to the first handshake data.

According to an embodiment, the parent process is adapted to generate the first attestation tag in response to the first handshake data.

In an embodiment, the runtime system is further adapted to share a first cryptographic key between the first child process and the second child process via the communication channel.

The first cryptographic key may comprise a first asymmetric public-private key shared between the first child process and the second child process via the communication channel.

According to an embodiment the first handshake request and/or the first handshake data comprises the first public key.

### Brief description of the Figures

The features and advantages of the present disclosure will become best apparent from a detailed description of embodiments with reference to the accompanying drawings, in which:
- Fig. 1: illustrates an industrial control environment in which the techniques of the present disclosure may be employed;
- Fig. 2: is a schematic illustration of a runtime system for an industrial control environment according to an embodiment;
- Fig. 3: is a flow diagram of a method for operating a runtime system for an industrial control environment according to an embodiment;
- Fig. 4: illustrates a process flow of a handshake between two child processes of a runtime system according to an embodiment;
- Fig. 5: shows a handshake data package that may be employed in a handshake between two child processes of a runtime system according to an embodiment;
- Fig. 6: illustrates a process flow of an interprocess communication between two child processes of a runtime system according to an embodiment; and
- Fig. 7: shows an interprocess communication function call package that may be employed in an interprocess communication between two child processes of a runtime system according to an embodiment.

### Description of Embodiments

An industrial controller system and a method of operating an industrial controller system will now be described with reference to an exemplary industrial control environment 10 that involves control of a gantry crane 12 by means of industrial control software. However, this example is merely for illustration, and in general the techniques according to the present disclosure may be employed for the industrial control of any kind of industrial process, comprising but not limited to control of industrial machinery, robots, chemical fabrication processes, or light control applications.

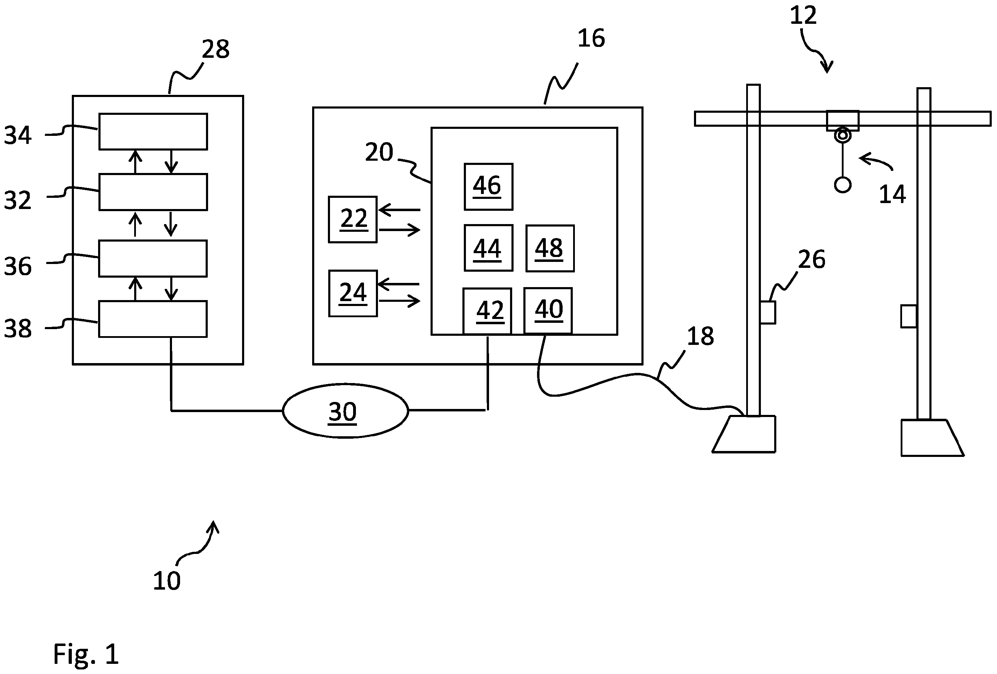

As illustrated in Figure 1, the industrial control environment 10 comprises a gantry crane 12, which may be a crane employed in a factory environment to move heavy goods in an assembly hall by means of a movable hook assembly 14.

The industrial control environment 10 further comprises an industrial controller system 16, such as a computer system or industrial PC that is connected to the gantry crane 12 by means of a control line 18, such as a wired or wireless connection. In some examples, the control line 18 may form part of an industrial control network, such as a fieldbus network.

The industrial controller system 16 may comprise a runtime system 20, which may run an industrial control program for controlling the gantry crane 12, such as in the form of compiled source code or ladder logic instructions. The industrial controller system 16 may further comprise processing resources, such as at least one data processing unit 22 (such as a central processing unit, CPU), and memory resources, such as at least one data memory unit 24, to which the runtime system 20 may revert for data processing. In general, the runtime system 20 may correspond to a software package or software application running on the operating system of the industrial controller system 16.

An industrial control environment 10 may generally comprise a plurality of industrial controller systems for controlling a plurality of processes or machinery, but this is not shown in Fig. 1 to keep the description simple and focused. Each of the plurality of industrial controller systems may correspond to the industrial controller system 16 described above.

The industrial controller system 16 may be communicatively connected to allow the runtime system 20 to communicate back and forth with the gantry crane 12 via the control line 18. For instance, the runtime system 20 may provide instructions to the gantry crane 12 in the form of fieldbus commands that comprise both header data and payload data for the operation of actuators to move the hook assembly 14 along a pre-determined path. Via the control line 18 the runtime system 20 may also receive sensor signals pertaining to an operation of the gantry crane 12, and may employ this feedback as input data for the data processing. For instance, such sensor signals may be generated by motion sensors 26 indicating a position of the hook assembly 14 on the gantry crane 12.

The industrial control environment 10 may further comprise a programming system 28 that is connected to the runtime system 20 via a network 30, such as a factory intranet or the Internet. For instance, the programming system 28 may comprise a desktop PC or other computing device, and may be employed by a programmer to design and generate industrial control software for the industrial controller system 16, for instance in the form of an industrial control application in a high-level programming language, such as C or C++. For instance, the industrial control application may comply with the industry standard IEC 61131-3.

As further illustrated in Fig. 1, the programming system 28 may comprise a programming interface 32, such as a programming editor or a graphical editor that allows a programmer to generate the software code of the industrial control application in the high-level programming language. The programming system 28 may further comprise a programming memory unit 34 and a programming processor unit 36 that are connected to the programming interface 32. The programming memory unit 34 may store functions, function blocks or variables that can be employed by the programmer when generating the application code of the industrial control program. The programming processor unit 36 may provide the processing resources to run the programming interface 32 and to generate the application code of the industrial control program. The programming system 28 may provide the application code for the industrial control program, and possibly parameters for the operation of the gantry crane 12, to the industrial controller system 16 via a programming communication interface 38 and the network 30.

In order to perform the various functions described above and other functionalities, the runtime system 20 typically comprises different software components operating in a common process space of the runtime system 20. For instance, a process communication interface 40 may be adapted to manage the bidirectional communication with the controlled industrial process, such as the gantry crane 12, via the control line 18. The industrial controller system 16 may exchange fieldbus commands with the gantry crane 12 via the process communication interface 40.

A user communication interface 42 may be adapted to manage the bidirectional communication with the programming system 28 via the network 30. The user communication interface 42 may optionally comprise or be coupled to a web server component 44 of the industrial controller system 16.

A user management component 46 may be adapted to manage access rights to the industrial controller system 16, including the management of passwords and possibly the update of software and firmware running on the industrial controller system 16.

A visualization component 48 may be adapted to process data provided by the industrial process, such as the gantry crane 12, via the control line 18, and to make that data available to a user in a graphical format, such as via the network 30 and possibly relying on the web server component 44.

Depending on the complexity of the industrial control environment 10, the runtime system 20 may comprise a considerable number of software components 40, 42, 44, 46, 48, ... These components usually share a common process space, which facilitates the data processing but may make the entire runtime system 20 vulnerable to unauthorized access. For instance, an intruder that manages to infiltrate one component via the network 30, such as the visualization component 48, may gain access to the entire process space. This may allow the intruder to manipulate the commands processed in the process communication interface 40, and thereby the operation of the gantry crane 12.

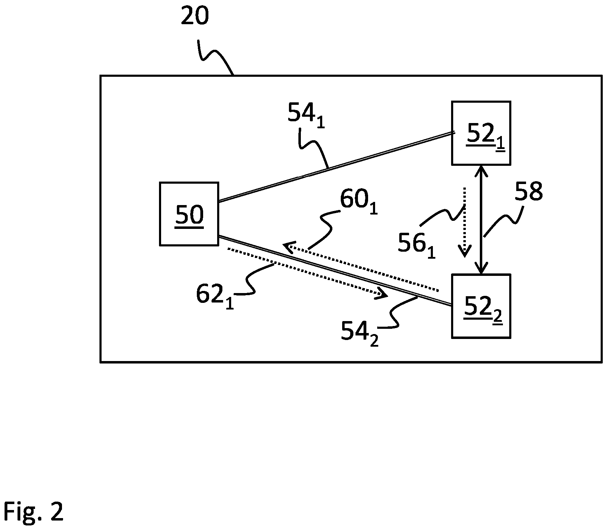

A runtime system 20 that addresses these problems and enhances the security against unauthorized access is schematically illustrated in Fig. 2.

The runtime system 20 comprises a parent process 50 as well as a first child process 52₁ that is connected to the parent process 50 via a first private bidirectional communication channel 54₁. The runtime system 20 further comprises a second child process 52₂ that is connected to the parent process 50 via a second private bidirectional communication channel 54₂.

Each of the first child process 52₁ and the second child process 52₂ may correspond to any of the software components 40, 42, 44, 46, 48, ... described above with reference to Fig. 1, or to any other software component or functionality of the runtime system 20.

While Fig. 2 shows a configuration with only two child processes 52₁, 52₂ and two private bidirectional communication channels 54₁, 54₂ for the sake of simplicity, in general the runtime system 20 may comprise any integer number n of child processes 52₁, ..., 52ₙ and corresponding private bidirectional communication channels 54₁, ..., 54ₙ.

Each of the child processes 52₁, ..., 52ₙ may comprise its own process space, comprising their assigned memory space and variables.

In some embodiments, the entire runtime system 20 may be partitioned into a plurality of child processes 52₁, ..., 52ₙ that each communicate with the parent process 50 via respective private bidirectional communication channels 54₁, ..., 54ₙ.

With further reference to Fig. 2, the second child process 52₂ is adapted to receive a first handshake request 56₁ from the first child process 52₁ via a communication channel 58. In addition, the second child process 52₂ is adapted to verify the authenticity of the first handshake request 56₁, wherein verifying the authenticity of the first handshake request 56₁ comprises sending a first attestation request 60₁ from the second child process 52₂ to the parent process 50 via the second private bidirectional communication channel 54₂ and receiving a first attestation confirmation 62₁ from the parent process 50 via the second private bidirectional communication channel 54₂.

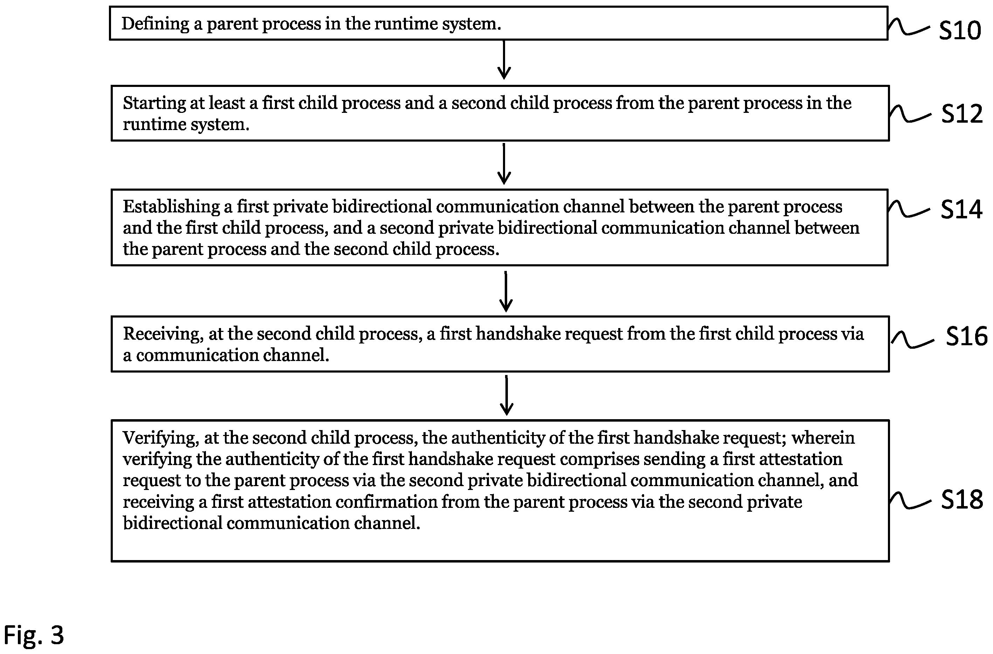

A flow diagram illustrating a corresponding method for operating a runtime system for an industrial control environment is illustrated in Fig. 3.

In a first step S10, a parent process is defined in the runtime system.

In a second step S12, a first child process and a second child process are started from the parent process in the runtime system.

In a third step S14, a first private bidirectional communication channel is established between the parent process and the first child process, and a second private bidirectional communication channel is established between the parent process and the second child process.

In a fourth step S16, a first handshake request is received at the second child process from the first child process via a communication channel.

In a fifth step S18, the authenticity of the first handshake request is verified at the second child process, wherein verifying the authenticity of the first handshake request comprises sending a first attestation request to the parent process via the second private bidirectional communication channel, and receiving a first attestation confirmation from the parent process via the second private bidirectional communication channel.

While the flow diagram of Fig. 3 necessarily shows these method steps in a certain order, the disclosure is not so limited, and the steps may be implemented in another time order. For instance, the first private bidirectional communication channel between the parent process and the first child process may be established before or after the second child process is started from the parent process in the runtime system.

When the parent process 50 starts a child process 52₁, 52₂, such as both under a Windows or a Linux operating system, the child process 52₁, 52₂ can be considered an associated or subordinated process of the parent process 50. The respective private bidirectional communication channels 54₁, 54₂ between the parent process 50 and the respective child processes 52₁, 52₂ allow to establish a communication path that is accessible only from the parent process 50 and the respective child process 52₁, 52₂. For instance, the private bidirectional communication channels 54₁, 54₂ may be implemented as a pipe, in particular an anonymous pipe, which is available under both Windows and Linux.

Employing the first private bidirectional communication channel 54₁, the parent process 50 may sign data of the first child process 52₁, and may thereby provide an attestation for the second child process 52₂, or any other child process that the first child process 52₁ is authentic, in the sense that it is a process that was started and is endorsed by the parent process 50.

In the context of the present disclosure, the parent process 50 may serve as a management process that may start, manage and endorse some or all functionalities of the runtime system 20 in the form of child processes 52₁, ..., 52ₙ, for some integer number n.

The various child processes 52₁, ..., 52ₙ may subsequently establish interprocess communication by building respective communication paths. When establishing the interprocess communication, before sending a first handshake request 56₁ to the second child process 52₂ via the communication channel 58, the first child process 52₁ may provide first handshake data 64₁ to the parent process 50. The parent process 50 may check whether the first handshake data 64₁ originates from a valid child process, in this case the first child process 52₁. Once the parent process 50 has verified the authenticity of the first child process 52₁, the parent process 50 may return a first attestation tag 66₁ to the first child process 52₁.

In some embodiments, the attestation tag may comprise a signature or a Hashed Message Authentication Code (HMAC).

The first child process 52₁ may provide the first attestation tag 66₁ to the second child process 52₂ as part of the first handshake request 56₁. The second child process 52₂ may subsequently provide the first attestation tag 66₁ to the parent process 50 as (part of) the first attestation request 60₁. The parent process 50 may check the first attestation tag 66₁ to verify that it is genuine, and if so may send the first attestation confirmation 62₁ to the second child process 52₂. The first attestation confirmation 62₁ may confirm to the second child process 52₂ that the first handshake request 56₁ originated from the first child process 52₁.

These techniques allow different child processes 52₁, ..., 52ₙ to mutually verify their origin, and hence intruders can be detected and isolated in the runtime system 20. As a result, the security of the runtime system 20 is significantly enhanced. The solution of the present disclosure can be employed in a variety of different operating systems, without requiring any hardware modifications.

Figures 2 and 3 illustrate the sequence of method steps in which the second child process 52₂ may verify the authenticity of the first handshake request 56₁ originating from the first child process 52₁. The same techniques may also be employed to allow the first child process 52₁ to verify the authenticity of a second handshake request 56₂ originating from the second child process 52₂, simply by interchanging the roles of the first and second child processes. In many relevant scenarios, a two-way or mutual verification is desirable, and hence both verifications may be run sequentially.

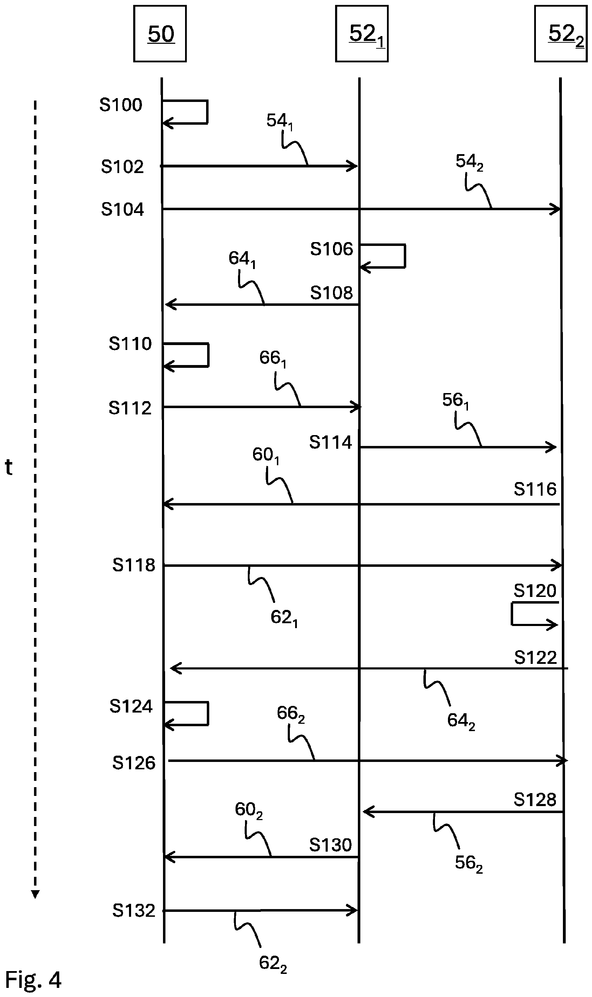

Fig. 4 illustrates in additional detail an exemplary process flow of a mutual handshake between the first child process 52₁ and the second child process 52₂. Time t is running from top to bottom in the process flow of Fig. 4.

In a step S100, the parent process 50 may create pairs of cryptographic keys that may subsequently be employed in the attestation. The cryptographic key remains confidential, and will be kept secret by the parent process 50.

In subsequent steps S102 and S104, the parent process 50 may start the first child process 52₁ and the second child process 52₂ and may establish the first private bidirectional communication channel 54₁ with the first child process 52₁ and the second private bidirectional communication channel 54₂ with the second child process 52₂, as described above with reference to Figures 2 and 3. The first private bidirectional communication channel may be implemented as a first anonymous pipe 54₁, and the second private bidirectional communication channel may be implemented as a second anonymous pipe 54₂.

At a later point in time, the first child process 52₁ may want to establish an interprocess communication with the second child process 52₂. At step S106, the first child process 52₁ may generate a public-private pair of cryptographic keys, such as an asymmetric Diffie-Hellman key. At step S108, the first child process 52₁ may send the first handshake data 64₁ to the parent process 50 for attestation via the first pipe 54₁. The first handshake data 64₁ may comprise the public cryptographic key of the asymmetric Diffie-Hellman key, as well as further data comprising information on the maximally supported protocol version and the supported cryptographic algorithms.

At a subsequent step S110, the parent process 50 may attest or authenticate the first handshake data 64₁, employing the cryptographic key previously generated at step S100. At a subsequent step S112, the parent process returns the authenticated first handshake data to the first child process 52₁ via the first pipe 54₁, the authenticated first handshake data comprising the first attestation tag 66₁.

For instance, the first attestation tag 66₁ may be or may comprise the public key of another asymmetric Diffie-Hellman key, while the parent process 50 safely keeps and stores the corresponding private key. In general, in the context of the present disclosure any digital signature or Message Authentication Code (MAC) may be employed for the attestation.

In the setup described above with reference to Fig. 4, it is the first child process 52₁ that generates the public-private pair of cryptographic keys at step S106. In a more centralized configuration, alternatively it could be the parent process 50 that generates the public-private pair of cryptographic keys on behalf of the first child process 52₁, and communicates it to the first child process 52₁ via the first private bidirectional communication channel 54₁ alongside the first attestation tag 66₁. This variant may pose higher requirements on the integrity of the first private bidirectional communication channel 54₁.

Either way, at a subsequent step S114 the first child process 52₁ provides the attested first handshake data, comprising the first attestation tag 66₁, to the second child process 522 as (part of) the first handshake request 56₁.

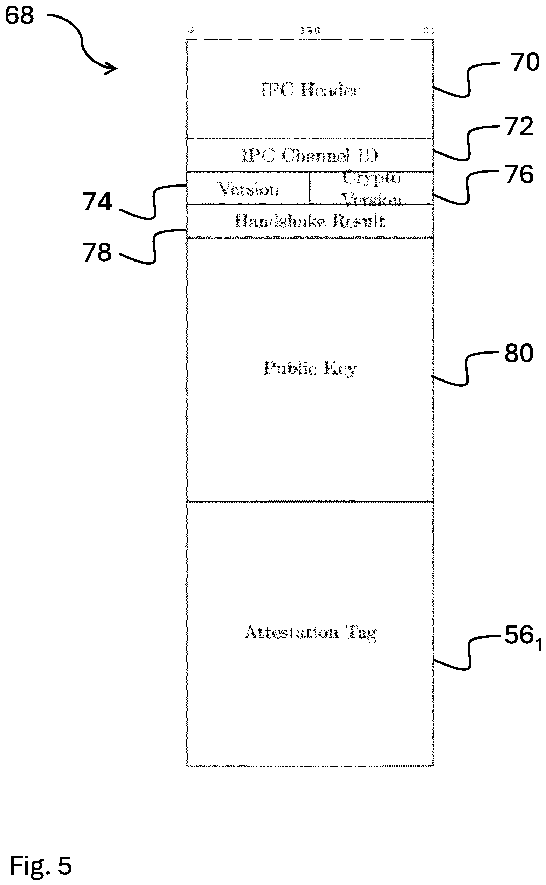

An example of a corresponding handshake package 68 is illustrated in Fig. 5.

The handshake package 68 comprises an Inter Process Communication (IPC) header 70, which may comprise information on the type of data package, such as "handshake request". The IPC header 70 may also comprise information on the data size of the handshake package 68.

The handshake package 68 may further comprise an IPC channel ID 72 to identify the interprocess communication between the first child process 52₁ and the second child process 52₂. The IPC channel ID 72 may be assigned by the parent process 50 as part of the attestation step S110. As shown in Fig. 5, the handshake package 68 may further comprise information on the maximally supported protocol version 74, the maximally supported cryptographic protocol 76 and a field for the handshake result 78. In addition, the handshake package 68 comprises the public key 80 of the asymmetric Diffie-Hellman key generated by the first child process 52₁ at step S106, and the first attestation tag 66₁ received from the parent process 50 at step S112.

Returning to the process flow of Fig. 4, at a subsequent step S116 the second child process 52₂ receives the first handshake request 56₁, and verifies the authenticity of the first handshake request 56₁. To this end, the second child process 52₂ forwards the first attestation tag 66₁, and possibly the entire handshake package 68 as illustrated in Fig. 5, to the parent process 50 via the second private bidirectional communication channel 54₂, as a first attestation request 60₁.

At a subsequent step S118, the parent process 50 receives the first attestation request 60₁ and checks the authenticity of the first attestation tag 66₁. The verification may be considered successful when the package has not been changed and the secret keys are identical. In this case, the parent process 50 confirms the authenticity of the first handshake request 56₁ to the second child process 52₂ via the second private bidirectional communication channel 54₂, as a first attestation confirmation 62₁.

Upon receiving the first attestation confirmation 62₁, the second child process 52₂ can be confident that the first handshake request 56₁ originated from a process of the same trustworthy process tree, in this case from the first child process 52₁.

In order to complete the handshake between the first child process 52₁ and the second child process 52₂, the same sequence of steps S106 to S118 may now be repeated, with the roles of the first child process 52₁ and the second child process 52₂ interchanged.

In particular, at a subsequent step S120 (corresponding to step S106), the second child process 52₂ generates second handshake data 64₂, again comprising a public key of an asymmetric public-private Diffie-Hellman key as well as supplementary information. The second child process 52₂ forwards the second handshake data 64₂ to the parent process 50 for attestation via the second pipe 54₂ at a subsequent step S122 (corresponding to step S108).

At step S124 (corresponding to step S110), the parent process 50 attests or authenticates the second handshake data 64₂, employing cryptographic keys previously generated at step S100. At a subsequent step S126 (corresponding to step S112), the parent process 50 returns the authenticated second handshake data to the second child process 52₂ via the second private bidirectional communication channel 54₂, the authenticated second handshake data comprising a second attestation tag 66₂.

For instance, the second attestation tag 66₂ may be or may comprise the public key of another asymmetric Diffie-Hellman key, while the parent process 50 safely keeps and stores the corresponding private key. In general, in the context of the present disclosure any digital signature or Message Authentication Code (MAC) may be employed for the attestation, as described above with reference to the first attestation tag 66₁.

At a subsequent step S128 (corresponding to the step S114), the second child process 52₂ sends a second handshake request 56₂ to the first child process 52₁. The second handshake request 56₂ may generally correspond to the first handshake request 56₁ and may have the format of the handshake package 68 illustrated above with reference to Fig. 5. In particular, the second handshake request 56₂ may comprise the public key generated by the second child process 52₂ at step S120, as well as the second attestation tag 66₂ received from the parent process 50 at step S126.

At step S130 (corresponding to step S116), the first child process 52₁ sends a second attestation request 60₂ to the parent process 50 via the first private bidirectional communication channel 54₁, the second attestation request 60₂ comprising the second attestation tag 66₂.

At a subsequent step S132 (corresponding to step S118), the parent process 50 checks the authenticity of the second attestation tag 66₂. In case of a successful verification, the parent process 50 confirms the results to the first child process 52₁ via the first private bidirectional communication channel 54₁, as a second attestation confirmation 62₂. This completes the mutual handshake.

In case of a successful mutual/bidirectional attestation, as described above with reference to Figures 4 and 5, the first and second child processes 52₁ and 52₂ have been mutually identified and authenticated via their respective child-parent relationship with the parent process 50. In particular, an intruder, such as a man in the middle (MitM), would have been identified, and hence the first and second child processes 52₁ and 52₂ can be confident in the integrity of the data traffic. Moreover, as part of the attestation, the first and second child processes 52₁ and 52₂ have exchanged pairs of public keys, which can subsequently be employed to encrypt the data traffic between them. At no point during the attestation process as described above with reference to Figures 4 and 5, secret information has been sent via unsecured data channels.

In the architecture according to the present disclosure, the security of the runtime system 20 relies at least to some extent on the integrity of the parent process 50. Thus, additional measures may be advisable to enhance the robustness and integrity of the parent process 50. For instance, the parent process 50 may be secured by means of a secure boot mechanism. In addition, the parent process 50 may store its cryptographic keys in Kernel Key Ring to additionally protect them against theft.

Following a successful handshake as described above with reference to Figures 4 and 5, the first child process 52₁ and the second child process 52₂ may now begin to communicate back and forth via the communication channel 58.

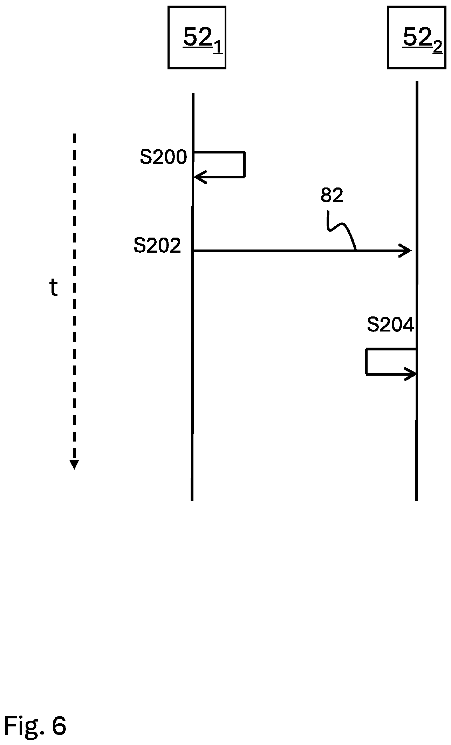

An exemplary interprocess communication between the first child process 52₁ and the second child process 52₂ will now be described in additional detail with reference to the process flow diagram of Fig. 6. Similarly to the process flow diagram of Fig. 4, time t is running from top to bottom in Fig. 6.

In the context of Fig. 6, we assume that the first child process 52₁ is the sender, and the second child process 52₂ is the receiver of the data package. However, the same communication protocol may be employed with the roles of the first child process 52₁ and the second child process 52₂ interchanged, and in general a bidirectional communication may comprise a time sequence of data exchanges in either direction.

At a first step S200, the interprocess communication (IPC) starts with the sender, i.e., the first child process 52₁ preparing the encoding. The details of the encoding may vary, because the techniques of the present disclosure guarantee that the user data can be secured independently of these details. Each of the first child process 52₁ and the second child process 52₂ may manage their own nonce values, which are checked for each received data package and are updated and transmitted for each data package that is sent out. These techniques may allow to detect a repetition of packages in either direction.

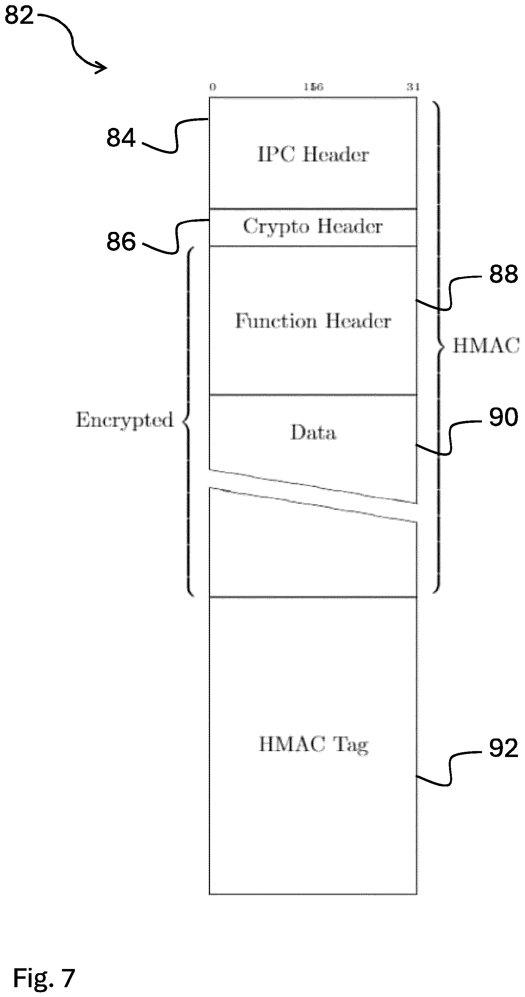

An exemplary IPC function call package 82 is illustrated in Fig. 7 and comprises an IPC header 84 that may be similar in design and content to the header 70 described above with reference to the handshake package 68 of Fig. 5.

The IPC function call package 82 may further comprise a cryptography header 86, which may comprise two nonce values, namely a new nonce that represents the current nonce of the (sending) first child process 52₁ and the last nonce received from the (receiving) second child process 52₂. Both the new nonce and the last nonce may have a length of 32 bytes.

A function header 88 of the IPC function call package 82 may comprise information on the component and function that shall be called, as well as information on the size of the user data 90.

The user data 90 may be encrypted, employing the public key received from the second child process 52₂ as part of the handshake described above with reference to Figures 4 and 5.

In an example, the first 16 bytes of the new nonce may be employed as an initialization vector for the encryption. This may spare the effort of having to generate additional random numbers.

Following the encryption, a Hashed Message Authentication Code (HMAC) may be computed across the entire function call package, and a corresponding HMAC tag 92 may be appended to the package. The resulting scheme is sometimes called "Encrypt then MAC". It allows to identify modifications that lack an encryption, and can thereby help to prevent attacks on the encryption itself.

Returning to the process flow diagram of Fig. 6, the resulting IPC function call package 82 is transmitted from the first child process 52₁ to the second child process 52₂ via the communication channel 58.

At a subsequent step S204, the second child process 52₂ checks the HMAC tag 92 and the employed nonce value. If both are valid and match the identity data of the first child process 52₁ as recorded in the handshake, the second child process 52₂ continues by decrypting the user data 90, employing its private key. Following the encryption, the second child process 52₂ retrieves the function call and the parameters.

In summary, as a consequence of the techniques of the present disclosure the data and function call have been transmitted undistorted and cryptographically secured from the first child process 52₁ to the second child process 52₂. The origin of the data has been guaranteed by the preceding handshake, as described above with reference to the flow diagram of Fig. 4. A replay of monitored packages can be detected. The security of the protocol is independent of the carrier medium. By employing the "Encrypt then MAC" scheme, even modifications on the encrypted data can be revealed. This allows to prevent attacks on the encryption, such as Padding Oracle.

In variations of the protocol, the cryptographic encryption of the user data 90 may be dispensed with. This may contribute to protocols that are particularly slim and efficient in terms of processing time and memory resources.

The description of the embodiments and the Figures merely serve to illustrate the techniques of the present disclosure and some advantages associated therewith, but should not be misunderstood to imply any limitation. The scope of the disclosure is to be determined from the appended claims.

### Reference Signs

- 10: industrial control environment
- 12: gantry crane
- 14: movable hook assembly
- 16: industrial controller system
- 18: control line, industrial control network, fieldbus
- 20: runtime system
- 22: data processing unit
- 24: data memory unit
- 26: motion sensor
- 28: programming system
- 30: network
- 32: programming interface
- 34: programming memory unit
- 36: programming processor unit
- 38: programming communication interface of the programming system 28
- 40: process communication interface of the industrial controller system 16
- 42: user communication interface of the industrial controller system 16
- 44: web server component
- 46: user management component
- 48: visualization component
- 50: parent process
- 521, 522: first child process, second child process
- 541, 542: first and second private bidirectional communication channel
- 561, 562: first and second handshake request
- 58: communication channel
- 601, 602: first and second attestation request
- 621, 622: first and second attestation confirmation
- 641, 642: first and second handshake data
- 661, 662: first and second attestation tag
- 68: handshake package
- 70: IPC header of handshake package 68
- 72: IPC channel ID of handshake package 68
- 74: maximally supported protocol version of handshake package 68
- 76: maximally supported cryptographic protocol of handshake package 68
- 78: handshake result of handshake package 68
- 80: public key
- 82: IPC function call package
- 84: IPC header of IPC function call package 82
- 86: cryptography header of IPC function call package 82
- 88: function header of IPC function call package 82
- 90: user data of IPC function call package 82
- 92: HMAC tag of IPC function call package 82

## Claims

1. A method for operating a runtime system (20) for an industrial control environment (10), the method comprising:
defining a parent process (50) in the runtime system (20);
starting at least a first child process (52₁) and a second child process (52₂) from the parent process (50) in the runtime system (20);
establishing a first private bidirectional communication channel (54₁) between the parent process (50) and the first child process (52₁), and a second private bidirectional communication channel (54₂) between the parent process (50) and the second child process (522);
receiving, at the second child process (52₂), a first handshake request (56₁) from the first child process (52₁) via a communication channel (58); and
verifying, at the second child process (52₂), the authenticity of the first handshake request (56₁);
wherein verifying the authenticity of the first handshake request (56₁) comprises sending a first attestation request (60₁) to the parent process (50) via the second private bidirectional communication channel (54₂), and receiving a first attestation confirmation (62₁) from the parent process (50) via the second private bidirectional communication channel (54₂).

2. The method according to claim 1, wherein the first handshake request (56₁) comprises a first attestation tag (66₁).

3. The method according to claim 2, further comprising, at the first child process (52₁), providing first handshake data (64₁) to the parent process (50) via the first private bidirectional communication channel (54₁), and receiving the first attestation tag (66₁) from the parent process (50) via the first private bidirectional communication channel (54₁) in response to the first handshake data (64₁).

4. The method according to claim 3, further comprising, at the parent process (50), generating the first attestation tag (66₁) in response to the first handshake data (64₁).

5. The method according to any one of the preceding claims, further comprising sharing a first cryptographic key between the first child process (52₁) and the second child process (52₂) via the communication channel (58).

6. The method according to claim 5, wherein the first cryptographic key comprises a first asymmetric public-private key shared between the first child process (52₁) and the second child process (52₂) via the communication channel (58).

7. The method according to claim 6, wherein the first handshake request (56₁) and/or the first handshake data (64₁) comprises the first public key (80) of the first asymmetric public-private key.

8. The method according to any one of the preceding claims, further comprising:
receiving, at the first child process (52₁), a second handshake request (56₂) from the second child process (52₂) via the communication channel (58); and
verifying, at the first child process (52₁), the authenticity of the second handshake request (56₂);
wherein verifying the authenticity of the second handshake request (56₂) comprises sending a second attestation request (60₂) to the parent process (50) via the first private bidirectional communication channel (54₁), and receiving a second attestation confirmation (62₂) from the parent process (50) via the first private bidirectional communication channel (54₁).

9. A computer program comprising computer-readable instructions, wherein the computer-readable instructions, when run on a runtime system (20) for an industrial control environment (10), implement on the runtime system (20) a method according to any one of the preceding claims.

10. A runtime system (20) for an industrial control environment (10), comprising:
a parent process (50);
a first child process (52₁) connected to the parent process (50) via a first private bidirectional communication channel (54₁); and
a second child process (52₂) connected to the parent process (50) via a second private bidirectional communication channel (54₂);
wherein the second child process (52₂) is adapted to receive a first handshake request (56₁) from the first child process (52₁) via a communication channel (58); and
wherein the second child process (52₂) is adapted to verify the authenticity of the first handshake request (56₁); wherein verifying the authenticity of the first handshake request (56₁) comprises sending a first attestation request (60₁) from the second child process (52₂) to the parent process (50) via the second private bidirectional communication channel (54₂) and receiving a first attestation confirmation (62₁) from the parent process (50) via the second private bidirectional communication channel (54₂).

11. The runtime system (20) according to claim 10, wherein the second child process (52₂) is adapted to allow a bidirectional communication with the first child process (52₁) via the communication channel (58) upon successfully verifying the authenticity of the first handshake request (56₁).

12. The runtime system (20) according to claim 10 or 11, wherein the first handshake request (56₁) comprises a first attestation tag (66₁).

13. The runtime system (20) according to claim 12, wherein the first child process (52₁) is adapted to provide first handshake data (64₁) to the parent process (50) via the first private bidirectional communication channel (54₁), and is further adapted to receive the first attestation tag (66₁) from the parent process (50) via the first private bidirectional communication channel (54₁) in response to the first handshake data (64₁).

14. The runtime system (20) according to claim 13, wherein the parent process (50) is adapted to generate the first attestation tag (66₁) in response to the first handshake data (64₁).

15. The runtime system (20) according to any one of the claims 10 to 14, further adapted to share a first cryptographic key between the first child process (52₁) and the second child process (52₂) via the communication channel (58).
